(19) **Europäisches Patentamt**

**European Patent Office**

**Office européen des brevets**

(11) **EP 1 482 278 A2**

(12) **EUROPEAN PATENT APPLICATION**

(43) Date of publication:
   **01.12.2004 Bulletin 2004/49**

(51) Int Cl.⁷: **G01C 21/34**, G08G 1/0969

(21) Application number: **04076572.9**

(22) Date of filing: **27.05.2004**

(84) Designated Contracting States:
   **AT BE BG CH CY CZ DE DK EE ES FI FR GB GR
   HU IE IT LI LU MC NL PL PT RO SE SI SK TR**
   Designated Extension States:
   **AL HR LT LV MK**

(30) Priority: **28.05.2003 KR 2003033950**

(71) Applicant: **LG Electronics Inc.**
   **Seoul 150-875 (KR)**

(72) Inventor: **Hyoung, Jin Kim**
   **Gangnam-gu Seoul (KR)**

(74) Representative: **Ekström, Nils**
   **Albihns Göteborg AB**
   **P.O. Box 142**
   **401 22 Göteborg (SE)**

(54) **System and method for estimating driving time using road traffic condition information**

(57)    A method for estimating an elapsed drive time using road traffic condition information according to the present invention comprising: when destination information is inputted from a user, receiving search path information from a present location to a destination; determining whether a car is in a real time traffic information collection section for each link from the present location to the destination using the search path information, and estimating passing time for each link using in- formation on whether to collect real time traffic informa- tion; determining whether a waiting time is applied ac- cording to each of the links using the search path information, and estimating additional elapsed time; and estimating a total elapsed drive time by summing the passing time for each link and additional elapsed time.

Fig.1

Description

## BACKGROUND OF THE INVENTION

### Field of the Invention

The present invention relates to a car navigation system.

### Description of the Related Art

Generally, the car navigation system (hereinafter, referred to as "CNS") is a system for calculating a path to guide a car to destination at which a driver wants to arrive. The CNS sends a drive instruction to the driver using a present location to generate a drive direction of the car so as to enable the driver to drive the car along the calculated path. The general CNS is classified according to device independency and guide information construction time. The device independency enables path search and service provision.

In a method classified as a path search method, various kinds of information such as real time traffic information may be included to select a path.

Although it is assumed that real time traffic information is included, if geographical information and location information contained in a car are used, only the statistics information accumulated for a long time would be available since the period of updating information such as a map is long.

In addition, the CNS estimates an elapsed time and performs correction in real time using real time information or long-term statistics data for road traffic condition. The elapsed drive time is an estimate of how long a journey from a starting point to a selected destination will take, that is the elapsed time is equivalent to an estimated duration of the journey. The CNS receives real time traffic information and sums section travel time information to obtain an elapsed time. The CNS calculates the elapsed time in the region where the CNS cannot receive the traffic information. When the CNS does not receive the real time traffic information, the CNS uses a day/time-based traffic congestion to estimate the elapsed time. When, the CNS uses geographical information regardless of the received real time traffic information, the CNS reconstructs remaining time information considering the present drive condition of a car.

However, since additional elapsed time for turning and signal waiting is not considered in the prior art method of estimating the elapsed time for a search path using received real time traffic information and the long-term statistics information as described above, uncertainty of an elapsed drive time is large.

Additionally, the method for estimating an elapsed drive time for a search path using long-term statistics information includes performing estimation in a simple manner using time information for remaining distance according to the present drive condition. Accordingly, although the search path is not changed since the beginning of the guide, the reliability is low since the estimated time varies in real time as the time remaining to the destination is reached is recalculated,.

## SUMMARY OF THE INVENTION

Accordingly, the present invention is directed to a system and a method for estimating an elapsed drive time using road traffic condition information that substantially obviate one or more problems due to limitations and disadvantages of the related art.

It is an object of the present invention to provide a system and a method for estimating an elapsed drive time using road traffic condition information, which can more accurately estimate an expected elapsed drive time when a driver drives a car with a CNS along a search path.

It is another object of the present invention to provide a system and a method for estimating an elapsed drive time using road traffic condition information, which can provide a driver with a more accurate elapsed drive time along with additional information for supplementing road traffic condition that cannot defined by the related art traffic information collection method.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method for estimating an elapsed drive time using road traffic condition information, the method comprising: (a) when destination information is inputted from a user, receiving search path information from a present location to a destination, where said search path includes one or a plurality of links; (b) determining whether a link is in a real time traffic information collection section for each link in the search path from the present location to the destination using the search path information, and estimating passing time for each link using information on whether real time traffic information is available or not; (c) determining whether a waiting time should be applied to each of the links using the search path information, and estimating additional elapsed time; and (d) estimating a total elapsed drive time by summing the passing time for each link and additional elapsed time.

In another aspect of the present invention, a system for estimating an elapsed drive time using road traffic condition information comprises: a GPS unit for providing present location information of a car; a path search server for providing search path information from a present location to a destination with reference to destination information inputted by a user; and a CNS (car navigation system) for obtaining a passing time for each link from a present location to a destination and an additional elapsed time using real time search path information transmitted from the path search server or stored search path information, and then obtaining a total elapsed drive time by summing the obtained passing time for each link and the obtained additional elapsed time.

It is to be understood that both the foregoing general description and the following detailed description of the present invention are exemplary and explanatory and are intended to provide further explanation of the invention as claimed.

## BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a block diagram of a system for estimating an elapsed drive time using road traffic condition information according to the present invention;

Fig. 2 shows matrices for estimating an elapsed time in a system for estimating an elapsed drive time using road traffic condition information according to the present invention;

Fig. 3 is a flowchart of estimating an elapsed time by a method for estimating an elapsed drive time using road traffic condition information according to the present invention; and

Fig. 4 shows a matrix for estimating an average speed in estimating an elapsed time by a method for estimating an elapsed drive time using road traffic condition information according to the present invention.

## DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

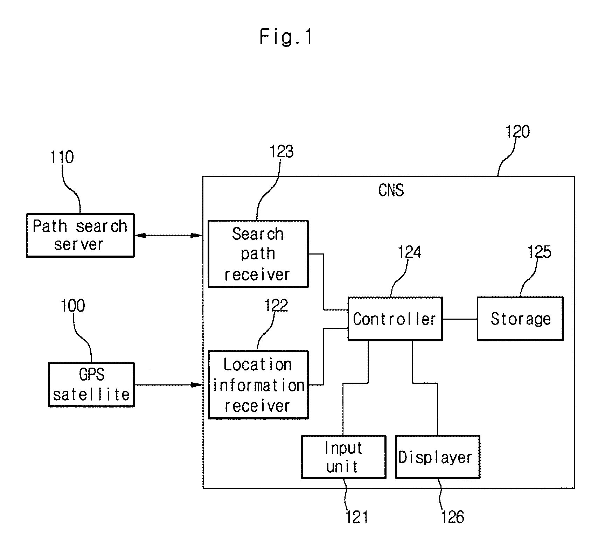

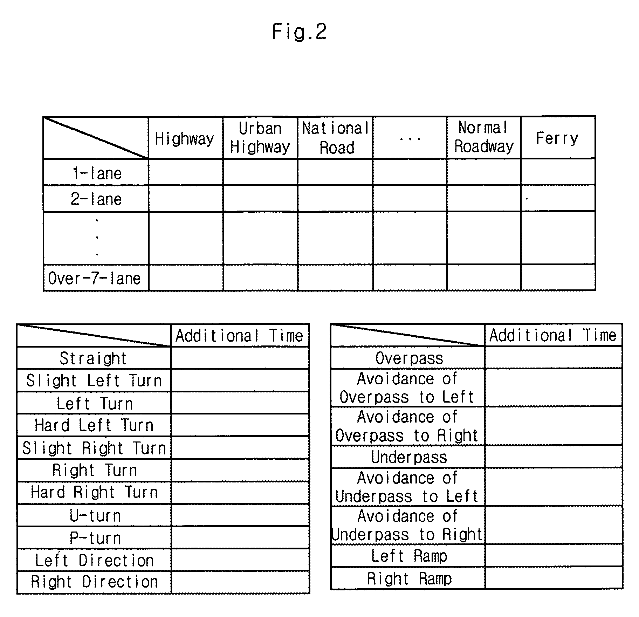

Fig. 1 is a block diagram of a system for estimating an elapsed drive time using road traffic condition information according to the present invention. Fig. 2 shows matrices for estimating an elapsed time in a system for estimating an elapsed drive time using road traffic condition information according to the present invention.

A system for estimating an elapsed drive time using road traffic condition information according to the present invention includes a GPS receiver 100, a path search server 110 and a CNS 120 as shown in Fig. 1.

The GPS receiver 100 transmits the present location information of a car to the CNS 120. The path search server 110 transmits real time traffic information on the section from the present location to the destination, long-term statistics information and road traffic condition information to the CNS when a user inputs the destination information. The road traffic condition information includes the kind of the road, the number of lanes of the road, whether traffic signal lamps exist or not, right/left turn information, an average waiting time for each direction at an intersection, average waiting times for U-turn and P-turn, average elapsed times of entrance/avoidance of lamp/facility, etc.

The CNS 120 obtains an elapsed drive time using real time traffic information transmitted from the path search server 110, long-term accumulated statistics information, and road traffic condition information. In other words, when the user inputs destination information, the CNS 120 receives, from the path search server 110, search path information on the section from the present location to the destination. The search path information may include geographical information, real time traffic information, long-term statistics information and road traffic condition information.

Then, the CNS 120 determines which links included in the search path have access to real time traffic information collection section. Herein, if a link is in the real time traffic information collection section, the passing time of a corresponding link is obtained using the following equation 1 The passing time of the corresponding link section is obtained using distance from the present location to the destination and a drive speed of the car.

Equation 1

$$T_{INFO} = \sum \frac{d(k)}{v_{INFO}(k)}$$

where $T_{INFO}$ is a passing time of the of the links of the search path which are in the real time traffic information collection section,

d(k) is a distance for each link, and

$V_{INFO}(k)$ is a speed for each link in the real time traffic information collection section.

Meanwhile, if a link included in the search path is in the section where the real time traffic information is not collected (hereinafter, referred to as real time traffic information non-collection section), since the CNS 120 should calculate speed from information included in a map, the CNS 120 obtains speed of a car using an average speed estimation matrix and obtains the passing time of the corresponding link section using the following equation 2. The average speed estimation matrix includes information on the kind of road/the number of lanes that can be extracted from a static map.

Equation 2

$$T_{MODEL} = \sum \frac{d(k)}{v_{MODEL}(k)}$$

where $T_{MODEL}$ is a passing time of the corresponding link section in the real time traffic information non-collection section,

d(k) is a distance for each link, and

$V_{MODEL}(k)$ is a speed of a link generated in the real time traffic information non-collection section.

Then, the CNS 120 determines whether a signal, turn information, facility, a lamp exist for a link, and obtains additional elapsed time using a waiting time for the link.

Since the additional elapsed time corresponds to a node whose waiting time determination criterion is an intersection or a forked road, a waiting time is applied after the car has passed the link so as to apply the additional elapsed time to the equation 3 defined with respect to the link. Accordingly, when the waiting time is included, the waiting time is used for an entrance link of a previous link which is connected to the entrance link, thereby applying the waiting time to the previous link of the node of the corresponding waiting time determination node. When there is no waiting time or when the waiting time is not necessary to apply according to guide determination criterion, the waiting time is set to be zero.

For example, when there exists traffic signal lamps, since each signal needs waiting time even for a car's going straight ahead, it is determined whether the waiting time is added for the straight passing road. Additional elapsed time can be calculated for turn information of each intersection using average waiting time or real time waiting time. When additional elapsed time is calculated, the waiting time just after turning is applied to a drive condition by making a remaining time include a turning waiting time.

In addition, with respect to the entrance/avoidance of lamp and facility, general average waiting time cannot be calculated but waiting times for lanes are estimated and used for entrance/avoidance according to collection of real time information. When information of existence of traffic signal lamps and information on turning and waiting times are not included in road traffic condition information, additional elapsed time is estimated using information described in Fig. 2.

The CNS 120 estimates a total elapsed time from the present location to destination link by summing an elapsed time in real time traffic information collection section, an elapsed time in the real time traffic information non-collection section and an additional elapsed time compensating for the waiting time.

Equation 3

$$T(i) = a \left[ \left\{ \sum \frac{d(k)}{v_{INFO}(k)} \right\} + \left\{ \sum \frac{d(k)}{v_{MODEL}(k)} \right\} \right] + \sum T_{AT}(k)$$

where T(i) is a total elapsed time from the present location to destination,

d(k) is a distance for each link,

$V_{INFO}$ is a speed of an effective link in the real time traffic information collection section,

$V_{MODEL}$ is a speed of a link generated in the real time traffic information non-collection section,

$T_{AT}$ is an additional elapsed time, and

a is compensation coefficient.

The CNS 120 described above includes an input unit 121, a location information receiver 122, a search path receiver 123, a controller 124, a storage 125 and a display unit 126 as shown in Fig. 1.

The input unit 121 receives destination information inputted by a user and transmits the destination information to the controller 124. The location information receiver 122 receives present location information transmitted from the GPS satellite 100. The search path receiver 123 receives road traffic condition information and geography/traffic information transmitted from the search server 110 to transmit the controller 124 in response to the present location information and the destination information inputted through the input unit 121 by the user.

Accordingly, the controller 124 obtains an elapsed drive time using the road traffic condition information and the geography/traffic information transmitted from the search path receiver 123. The controller 124 determines whether a corresponding car deviates from the geographical information transmitted from the path search server 110. Herein, if it is determined that the corresponding car deviates from the geographical information, the controller 124 searches the path by itself using the geography/traffic information stored in the storage 125. Then, the controller 124 displays the path extracted from the storage 125 through the display unit 126.

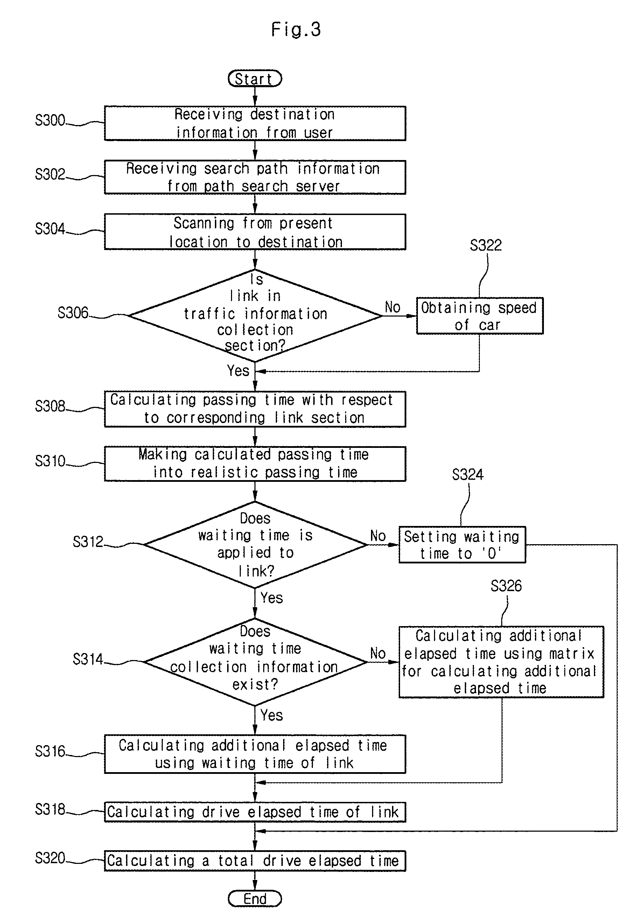

The detailed description will be made on the operation of the CNS configured as described above referring to Fig. 3.

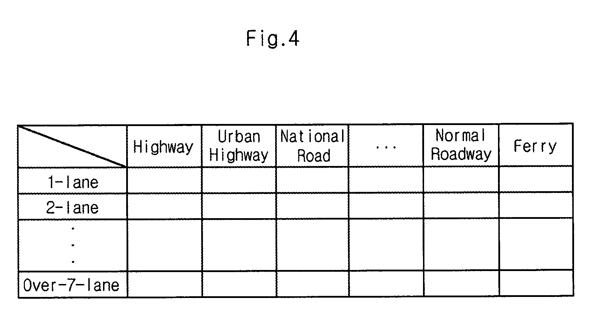

Fig. 3 is a flowchart of estimating an elapsed time by a method for estimating an elapsed drive time using road traffic condition information according to the present invention. Fig. 4 shows a matrix for estimating an average speed in estimating an elapsed time by a method for estimating an elapsed drive time using road traffic condition information according to the present invention.

Referring to Fig. 3, when the CNS receives destination information from a user (S300), the CNS receives, from the path search server, the search path information from the present location to the destination with reference to the present location information received from a GPS satellite (S302). After the step 302 is performed, the CNS scans from the present location to the destination (S304) to estimate an elapsed drive time for an entrance link. In other words, the CNS determines which links of the search path is in the real time traffic information collection section (S306). If it is determined that a link is in the real time traffic information collection section at the step S306, the CNS calculates a passing time for the corresponding link (S308). The passing time for the corresponding link is obtained using distance and drive speed of a car. After the step S308 is performed, the CNS applies a tuning parameter to the obtained passing time to make the obtained passing time into a realistic passing time (S310). After the step S310, the CNS determines whether the CNS should apply the waiting time to the link (S312). In other words, the CNS determines whether at least one of a traffic signal lamp, turn information, facility, a lamp, etc. exists with respect to the link. If it is determined that a waiting time should be applied to the link at the step S312, the CNS determines whether the waiting time collection information exists (S314). If it is determined that the waiting time collection information exists at the step S314, the CNS applies the waiting time of the link to estimate additional elapsed time (S316). Then, the CNS adds the estimated additional elapsed time to the passing time estimated at the step S310 to estimate an elapsed drive time (S318). The steps from S306 to S318 are performed according to link.

Then, the CNS sums the elapsed drive time from the present location to the destination according to each link to estimate a total elapsed drive time (S320). If it is determined that the search path is in the real time traffic information non-collection section at the step S306, the following method is used. In other words, since the CNS should calculate a speed by only the information included in a map, a speed of a car is obtained using an average speed estimation matrix shown in Fig. 4 including information on the kind of road/the number of lanes extractable from the static map (S322). Then, the step S308 is performed. If it determined that there does not exist the waiting time item in the link at the step S312, the CNS set the waiting time to be zero (S324). Then, the step S320 is performed. If it is determined that there exists the waiting time collection information for the link at the step S314, the CNS estimates additional elapsed time using the matrix for estimating an additional elapsed time shown in Fig. 2 (S326). Then, the step 318 is performed.

The present invention described above provides a method and a system for estimating an elapsed drive time using road traffic condition information for overcoming the error generated in estimating elapsed time with considering traffic information and the problems of user's transmission.

In addition, the present invention provides a method and a system for estimating an elapsed drive time using road traffic condition information used to estimate a result similar to a real elapsed time for temporary estrangement or variation of real time information.

Additionally, according to the present invention, if the elapsed time for each link is calculated using traffic information received periodically or once or using traffic information model of self-search, the elapsed time can be estimated at the corresponding link level according to drive after calculating remaining time including the waiting time. Accordingly, according to a method and a system for estimating an elapsed drive time using road traffic condition information according to the present invention, an overhead that should be calculated in real time for each hour can be expected to be reduced.

It will be apparent to those skilled in the art that various modifications and variations can be made in the present invention. Thus, it is intended that the present invention covers the modifications and variations of this invention provided they come within the scope of the appended claims and their equivalents.

**Claims**

1. A method for estimating an elapsed drive time using road traffic condition information, the method comprising:

   (a) when destination information is inputted from a user, receiving search path information from a present location to a destination, where said search path includes one or a plurality of links;
   (b) determining whether a link is in a real time traffic information collection section for each link in the search path from the present location to the destination using the search path information, and estimating passing time for each link using information on whether real time traffic information is available or not;
   (c) determining whether a waiting time should be applied to each of the links using the search path information, and estimating additional elapsed time; and
   (d) estimating a total elapsed drive time by summing the passing time for each link and additional elapsed time.

2. The method according to claim 1, wherein the search path information comprises real time traffic information, long-term accumulated statistics information, road traffic condition information and geographical information.

3. The method according to claim 2, wherein the road traffic condition information comprises at least one type of information selected from the group consisting of kind of a road, number of lanes of the road, whether traffic signal lamps exist or not, right/left turn information, an average waiting time for each direction at an intersection, average waiting times for U-turn and P-turn, and average elapsed times of entrance/avoidance of lamp/facility.

4. The method according to claim 1, wherein the step (b) comprising:

   when a link is in a real time traffic information collection section, calculating the passing time of that link using distance and speed retrieved from real time traffic information; and
   when a link is in a real time traffic information non-collection section, obtaining a speed of a car using a matrix set to estimate average speed, and calculating the passing time.

5. The method according to claim 4, wherein the matrix comprises information set according to number of lanes constituting each road and kind of road.

6. The method according to claim 1, wherein the step (c) comprising:

   (c-1) determining whether to apply the waiting time to a link using the search path information;
   (c-2) if it is determined that the waiting time should be applied to the link, determining whether there exists a waiting time collection information; and
   (c-3) if it is determined that there exists the waiting time collection information, calculating additional elapsed time using a waiting time with respect to the link.

7. The method according to claim 6, wherein, if it is determined that there does not exist any waiting time item with respect to the link as a result of the step (c-1), setting the waiting time to be zero.

8. The method according to claim 6, wherein, if it is determined that there does not exist any waiting time collection information as a result of the step (c-2), estimating additional elapsed time using a matrix set to estimate the additional elapsed time.

9. The method according to claim 8, wherein the matrix comprises information set according to number of lanes constituting each road and kind of road.

10. A system for estimating an elapsed drive time using road traffic condition information, comprising:

a GPS unit for providing present location information of a car;
a path search server for providing search path information from a present location to a destination with reference to destination information inputted by a user, where said search path includes one or a plurality of links; and
a CNS (car navigation system) for obtaining a passing time for each link from a present location to a destination and an additional elapsed time using real time search path information transmitted from the path search server or stored search path information, and then obtaining a total elapsed drive time by summing the obtained passing time for each link and the obtained additional elapsed time.

11. The system according to claim 10, wherein the CNS stores geographical information for partial path correction without connecting to the path search server, and obtains elapsed drive time from the present location to the destination by itself using the stored geographical information.

12. The system according to claim 10, wherein the search path information comprises traffic information, long-term accumulated statistics information, road traffic condition information and geographical information.

13. The system according to claim 12, wherein the road traffic condition information comprises at least one type of information selected from the group consisting of kind of a road, number of lanes of the road, whether traffic signal lamps exist or not, right/left turn information, an average waiting time for each direction at an intersection, average waiting times for U-turn and P-turn, and average elapsed times of entrance/avoidance of lamp/facility.

14. The system according to claim 10, wherein, in estimating passing time for each link from the present location to the destination using the search path information,
    when an entrance link is in a real time traffic information collection section, the passing time is calculated using distance and speed with respect to a corresponding link section; and
    when the entrance link is in a real time traffic information non-collection section, a speed of a car is obtained using a matrix set to estimate average speed, and the passing time is calculated.

15. The system according to claim 14, wherein the matrix comprises information set according to number of lanes constituting each road and kind of road.

16. The system according to claim 10, wherein, in obtaining additional elapsed time according to each of the links using the search path information,
    it is determined whether to apply the waiting time to a link using the search path information;
    if it is determined that the waiting time should be applied to the link, it is determined whether there exists a waiting time collection information; and
    if it is determined that there exists the waiting time collection information, an additional elapsed time is calculated using a waiting time with respect to the link.

17. The system according to claim 16, wherein, if it is determined that there does not exist any waiting time item with respect to the link as a result of determining whether to apply the waiting time to the link using the search path information, the waiting time is set to be zero.

18. The system according to claim 16, wherein, if it is determined that there does not exist any waiting time collection information as a result of determining whether there exists a waiting time collection information, additional elapsed time is estimated using a matrix set to estimate the additional elapsed time.

**19.** The system according to claim 18, wherein the matrix comprises information set according to number of lanes constituting each road and kind of road.

Fig.1

110
100
120
123
122
124
125
121
126

Path search server

GPS satellite

CNS

Search path receiver

Location information receiver

Controller

Storage

Input unit

Displayer

Fig.2

| | Highway | Urban Highway | National Road | . . . | Normal Roadway | Ferry |
|---|---|---|---|---|---|---|
| 1-lane | | | | | | |
| 2-lane | | | | | | . |
| . . . | | | | | | |
| Over-7-lane | | | | | | |

| | Additional Time |
|---|---|
| Straight | |
| Slight Left Turn | |
| Left Turn | |
| Hard Left Turn | |
| Slight Right Turn | |
| Right Turn | |
| Hard Right Turn | |
| U-turn | |
| P-turn | |
| Left Direction | |
| Right Direction | |

| | Additional Time |
|---|---|
| Overpass | |
| Avoidance of Overpass to Left | |
| Avoidance of Overpass to Right | |
| Underpass | |
| Avoidance of Underpass to Left | |
| Avoidance of Underpass to Right | |
| Left Ramp | |
| Right Ramp | |

Fig.3

Start

S300 — Receiving destination information from user

S302 — Receiving search path information from path search server

S304 — Scanning from present location to destination

S306 — Is link in traffic information collection section?

No → S322 Obtaining speed of car

Yes

S308 — Calculating passing time with respect to corresponding link section

S310 — Making calculated passing time into realistic passing time

S312 — Does waiting time is applied to link?

No → S324 Setting waiting time to '0'

Yes

S314 — Does waiting time collection information exist?

No → S326 Calculating additional elapsed time using matrix for calculating additional elapsed time

Yes

S316 — Calculating additional elapsed time using waiting time of link

S318 — Calculating drive elapsed time of link

S320 — Calculating a total drive elapsed time

End

Fig.4

| | Highway | Urban Highway | National Road | ... | Normal Roadway | Ferry |
|---|---|---|---|---|---|---|
| 1-lane | | | | | | |
| 2-lane | | | | | | |
| . . . | | | | | | |
| Over-7-lane | | | | | | |